# FASCICULE DE BREVET EUROPEEN

(11) **EP 1 806 219 B1**
(45) Date de publication et mention de la délivrance du brevet: **06.07.2011**
(21) Numéro de dépôt: 07290021.0
(22) Date de dépôt: 08.01.2007
(51) Int. Cl.: B29C 70/68, B29C 43/20, A47G 23/06, B32B 27/00

(54) **Procédé de fabrication d'un plateau de service en matériau thermodurcissable comprenant une étiquette radiofréquence électronique, et plateau de service obtenu par un tel procédé**
Verfahren zur Herstellung eines Serviertablettes aus Duroplast mit einem RFID Etikett und damit hergestelltes Serviertablett
Method for producing a serving tray made of a thermosetting resin and comprising a RFID label and serving tray obtained thereby

(30) Priorité: 06.01.2006 FR 0650062
(43) Date de publication de la demande: 11.07.2007
(73) Titulaire: Platex Composites, 92700 Colombes (FR)
(72) Inventeur: Warnod, Marc, 92200 Neuilly-sur-Seine (FR)
(74) Mandataire: Novagraaf Technologies

(56) Documents cités:
- WO-A2-2005/097604
- FR-A- 2 621 156
- FR-A1- 2 653 705
- FR-A1- 2 729 327
- US-A- 4 083 453
- US-A1- 2002 030 597
- US-A1- 2003 127 765
- US-A1- 2005 024 290

## Description

L'invention concerne le domaine de la fabrication de plateaux de service en matériau thermodurcissable.

Par plateau de service, on entend un support comprenant une surface sensiblement plane, destiné à transporter de la vaisselle, des aliments prêts à servir, des médicaments, ou tous produits ou groupes de produits destinés à être transportés d'un point à un autre.

Le document FR-A1-2653705 décrit un procédé de fabrication d'un tel plateau.

Dans certains domaines, et notamment dans le domaine médical, il est devenu courant que les déficiences ou erreurs d'ordre humain ou organisationnels soient suivies d'actions judiciaires. En effet, dans des structures comme les hôpitaux, les cliniques, les maisons de retraite, etc., la distribution des repas est associée à une série d'actions, comme le chargement sur des chariots, la distribution et le lavage de plateaux, au cours desquelles des erreurs ou des dysfonctionnements peuvent avoir lieu, avec des conséquences plus ou moins graves.

Aussi, afin de se prémunir d'éventuelles actions judiciaires, il s'avère nécessaire de pourvoir garantir et prouver l'intégrité de la distribution des plateaux-repas au travers de mesures de suivi, de vérification et d'identification d'éventuels dysfonctionnements ou erreurs dans la distribution.

Dans d'autres domaines, tels que dans celui de la restauration en self-service, un problème croissant auquel se trouve confronté ce type de structures est le passage en caisse où les temps d'attente s'avèrent bien souvent trop longs, voire inutiles.

Par ailleurs, face à une clientèle de plus en plus exigente sur l'aspect diététique, il devient aujourd'hui important pour ce type de structure de pouvoir offrir un suivi nutritif de l'ensemble des repas. Or, les méthodes et moyens actuellement utilisés pour la constitution d'historiques de repas ne permettent pas d'établir des historiques suffisamment précis.

L'invention vise notamment à répondre à ces attentes en proposant un plateau de service « intelligent » permettant, en combinaison avec un dispositif associé, de disposer d'informations relatives, ou bien au plateau et à son parcours au travers de postes d'actions déterminées, ou bien aux aliments transportés sur un plateau.

A cet effet, et selon un premier aspect, l'invention concerne un procédé de fabrication d'un plateau de service selon la revendication 1.

Il est ainsi permis, avec le procédé de fabrication objet de l'invention, d'insérer des éléments de stockage d'informations électroniques sans qu'il ne soit procédé directement à une détérioration du plateau de service. L'aspect esthétique du plateau de service est ainsi conservé.

Il est également évité, avec ce procédé, la formation d'une surépaisseur correspondant à l'étiquette radiofréquence électronique, limitant ainsi le risque de salissures ou d'encrassement à l'emplacement de ladite étiquette.

Par ailleurs, l'insertion de l'étiquette radiofréquence électronique entre des strates de matériaux constituant le plateau de service permet d'éviter que celle-ci soit détachée de son support, du fait d'un usage répété (frottement, usure, ...) ou d'un d'acte volontaire.

Selon un mode de fabrication particulier, l'étape de recouvrement est précédée de la mise en place dans le moule de la ou desdites feuilles portant la ou les étiquette(s) radiofréquence électronique(s). Ce mode de fabrication sera notamment mis en oeuvre suivant le matériau thermoactivable employé.

Avantageusement, la première ou seconde feuille consiste en un film de protection destiné à protéger la ou lesdites étiquettes radiofréquence électronique(s) des agressions intervenant au cours de la fabrication (traitements chimiques, température, ...).

En remplacement, ou en complément du film de protection, il pourra être également prévu une étape préalable d'enrobage d'une ou plusieurs étiquettes radiofréquence électroniques dans un matériau thermodurcissable.

Les conditions de moulage (température, pression et durée) seront, de préférence, mais non exclusivement, au moins une des suivantes :
- température de moulage comprise entre 90°C et 200°C.
- pression comprise entre 25 kg/cm² et 100 kg/cm².
- temps de moulage compris entre 30 secondes et 5 minutes.

Selon la cadence de fabrication souhaitée, le moule sera avantageusement chargé, ou bien manuellement, ou bien mécaniquement.

Avantageusement, les feuilles thermodurcissables sont formées par un préimprégné (SMC), un prémix (BMC), ou des films de papier imprégnés de résine phénolique et/ou de résine mélamine.

Selon un deuxième aspect, l'invention concerne un plateau de service stratifié mélaminé selon la revendication 12 obtenu par le procédé de fabrication tel que décrit précédemment.

Selon un troisième aspect, l'invention concerne un plateau de service polyester selon la revendication 13 obtenu par le procédé de fabrication tel que décrit précédemment.

De tels plateaux ont pour avantage de porter directement l'information relative, selon le domaine d'application, au plateau lui-même et à son parcours au travers de postes d'actions déterminées, ou aux plats, aliments ou boissons disposés sur un plateau.

Ainsi, dans le domaine médical, de tels plateaux permettent de « porter » directement des informations ayant trait à des postes d'actions auxquels sont soumis lesdits plateaux (laverie, distribution, stockage), les informations comprenant notamment la date, l'heure, l'identification de la personne à qui le plateau a été distribué et éventuellement des informations spécifiques à chaque poste d'actions.

Dans le domaine de la restauration, de tels plateaux permettent de « porter » directement les informations relatives aux aliments choisis disposés sur le plateau, de sorte que le passage en caisse est facilité, voire éliminé, la facturation pouvant étant réalisée a posteriori. Ils présentent également un intérêt en terme de suivi nutritif dans la mesure où, à partir des informations répertoriées dans les plateaux, il peut être constitué un historique des repas choisis. Il sera ainsi particulièrement intéressant d'utiliser de tels plateaux dans la restauration scolaire de sorte à pouvoir identifier au cours de l'année la mauvaise alimentation de certains élèves.

D'autres objets et avantages de l'invention apparaîtront au cours de la description qui suit, faite en référence aux dessins annexés, dans lesquels :
- la figure 1 est une représentation schématique d'un premier mode de fabrication d'un plateau comprenant une étiquette radiofréquence, et
- la figure 2 est une représentation schématique d'un deuxième mode de fabrication d'un plateau comprenant une étiquette radiofréquence.

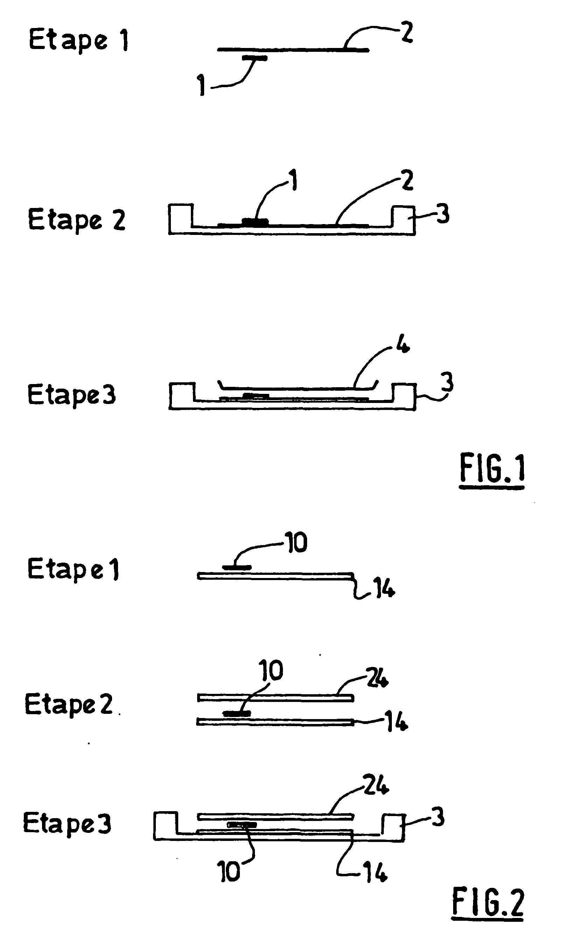

En relation avec la figure 1, on décrit les étapes de fabrication d'un plateau de service sur lequel est placé un élément de stockage d'informations. Dans la description qui suit, l'élément de stockage d'informations est formé par une étiquette radiofréquence électronique 1 (étiquette RFID) destinée à être associée avec un lecteur radiofréquence.

La première étape (étape 1) consiste à déposer sur l'étiquette radiofréquence 1 un film de protection 2, afin de la protéger des agressions intervenant d'une part au cours de la fabrication du plateau (abrasion, température et pression de moulage), et d'autre part lors de l'utilisation du plateau.

Dans cette optique, il pourra être également avantageux de préparer l'étiquette radiofréquence 1 lors d'une étape préalable d'enrobage de ladite étiquette 1 dans un matériau thermodurcissable compatible avec le matériau dans lequel le plateau doit être réalisé.

Une fois l'étiquette radiofréquence 1 protégée, celle-ci est disposée dans un moule 3 destiné à la fabrication du plateau, le film de protection 2 étant mis au contact dudit moule 3 (étape 2). Lors de cette étape, l'étiquette 1 sera positionnée dans le moule 3 de façon à prendre l'emplacement souhaité sur ledit plateau une fois ce dernier formé. Il est à noter qu'à cet effet, on aura également pris soin, lors de l'étape précédente, d'apposer le film de protection 2 sur l'étiquette 1 en vue de son placement dans ledit moule 3.

Le moule 3 est alors chargé manuellement ou mécaniquement, avec une matière thermodurcissable 4, recouvrant ladite étiquette radiofréquence, ladite matière étant de préférence préformée (étape 3).

Selon une première configuration de plateau, la matière avec laquelle le moule 3 est chargé consiste en un préimprégné du type SMC ou un prémix du type BMC.

Selon une autre configuration de plateau, le matériau thermodurcissable est une préforme constituée d'un ou plusieurs films de papier imprégnés de résine phénolique et/ou de résine mélamine selon les caractéristiques du plateau souhaitées. Selon une configuration préférée, la préforme sera constituée d'une ou plusieurs couche(s) de Kraft phénolique enveloppée par une ou plusieurs couche(s) de mélamine. Afin d'accroître la résistance du plateau obtenu, une couche complémentaire sera éventuellement déposée dans la couche de Kraft phénolique, constituant ainsi l'âme du plateau. De même, le plateau pourra porter un décor particulier. Pour ce faire, une feuille intermédiaire portant le décor sera disposée sous la couche de mélamine, pour recouvrir toute ou partie de la couche de Kraft phénolique.

Une fois le moule chargé, on procède au moulage par compression à chaud (étape non représentée) selon des conditions de température et de pression adaptées au matériau thermodurcissable employé. En tout état de cause, la température de moulage sera comprise entre 90°C et 200°C et la pression de moulage comprise entre 25 Kg/cm² et 100 Kg/cm².

Lors du moulage, le matériau thermodurcissable passe, avant sa polymérisation complète, par une phase liquide, ce qui lui confère ainsi une homogénéité parfaite. La durée de moulage sera adaptée à l'aptitude à polymériser du matériau thermodurcissable employé. La durée de moulage sera d'au moins 30 secondes.

A l'issue de l'opération de moulage, la couche de mélamine est devenue transparente.

La figure 2 décrit les étapes de fabrication d'un plateau dans lequel, cette fois-ci, l'étiquette radiofréquence est « encapsulée » dans le plateau.

Dans ce mode de fabrication, il convient de préparer une préforme de matériau thermodurcissable, laquelle préforme se présente en deux parties distinctes 14 et 24.

Les parties 14 et 24 se présentent sous la forme d'une ou plusieurs couches de préimprégné du type SMC ou de prémix du type BMC, ou de films de papier imprégnés de résine phénolique et/ou de résine mélamine, selon que le plateau souhaité est un plateau en polyester ou un plateau mélaminé.

Les première et deuxième parties 14 et 24 constitueront respectivement les parties inférieure et supérieure du plateau, ou inversement.

L'étiquette radiofréquence 10 est disposée sur une des parties 14 de la préforme, puis recouverte par l'autre partie 24 (étapes 1 et 2). On charge alors le moule 3 avec les parties 14, 24 de la préforme assemblées, puis on procède au moulage par compression à chaud selon les conditions de température, de pression et de durée décrites précédemment.

L'étiquette, ainsi surmoulée dans la masse du matériau constituant les parties 14 et 24, est totalement indissociable de celui-ci.

Il est décrit dans ce qui précède l'insertion en surface ou dans la matière du plateau une étiquette radiofréquence. Il est bien entendu évident que l'invention ne se limite à la présence d'une étiquette par plateau, un plateau pouvant comporter plusieurs étiquettes radiofréquences, chaque étiquette pouvant en outre être associée à un lecteur spécifique en vue d'une utilisation particulière.

L'invention est décrite dans ce qui précède à titre d'exemple. Il est entendu que l'homme du métier est à même de réaliser différentes variantes de l'invention sans pour autant sortir de l'invention.

## Revendications

1. Procédé de fabrication d'un plateau de service consistant en un support comprenant une surface sensiblement plane et destiné à transporter des produits, comportant:
- une étape de dépôt d'une ou plusieurs étiquettes radiofréquence électronique(s) (1, 10) sur au moins une première feuille de matériau thermoactivable (2, 14), le matériau de la première feuille étant thermodurcissable,
- une étape de recouvrement de ladite ou lesdites étiquettes radiofréquence électroniques (1, 10) avec au moins une seconde feuille de matériau thermoactivable (4, 24), le matériau de la seconde feuille étant thermodurcissable,
- une étape de moulage sous pression et à chaud des première et seconde feuilles thermoactivables (2, 4, 14, 24) jusqu'à la polymérisation complète des matériaux thermodurcissables de la première et de la seconde feuille.

2. Procédé de fabrication selon la revendication 1, **caractérisé en ce que** l'étape de recouvrement est précédée de la mise en place dans le moule (3) de la ou desdites feuilles (2, 14) portant la ou lesdites étiquette(s) radiofréquence électronique(s) (1, 10).

3. Procédé de fabrication selon la revendication 1 ou la revendication 2, **caractérisé en ce qu'**il comporte une étape préalable d'enrobage d'une ou plusieurs étiquettes radiofréquence électroniques (1, 10) dans un matériau thermodurcissable.

4. Procédé de fabrication selon l'une quelconque des revendications 1 à 3, **caractérisé en ce que** la première ou seconde feuille consiste en un film de protection de la ou desdites étiquettes radiofréquence électronique(s).

5. Procédé de fabrication selon l'une quelconque des revendications 1 à 4, **caractérisé en ce que** le moule (3) est chargé manuellement.

6. Procédé de fabrication selon l'une quelconque des revendications 1 à 4, **caractérisé en ce que** le moule (3) est chargé mécaniquement

7. Procédé de fabrication selon l'une quelconque des revendications précédentes, **caractérisé en ce que** la température de moulage est comprise entre 90°C et 200°C.

8. Procédé de fabrication selon l'une quelconque des revendications précédentes, **caractérisé en ce que** l'opération de moulage s'opère à une pression comprise entre 25 kg/cm² et 100 kg/cm².

9. Procédé de fabrication selon l'une quelconque des revendications précédentes, **caractérisé en ce que** le temps de moulage est compris entre 30 secondes et 5 minutes.

10. Procédé de fabrication selon l'une quelconque des revendications précédentes, **caractérisé en ce que** les feuilles (2, 4, 14, 24) sont des préimprégnés (SMC) ou des prémix (BMC).

11. Procédé de fabrication selon l'une quelconque des revendications 1 à 9, **caractérisé en ce que** les feuilles (2, 4, 14, 24) sont constituées par des films de papier imprégnés de résine phénolique et/ou de résine mélamine.

12. Plateau de service stratifié mélaminé **caracterisé en ce qu'**il est obtenu par le procédé de fabrication selon l'une quelconque des revendications 1 à 11, et **en ce qu'**il comprend au moins deux couches superposées de résine thermodurcissable, lesdites couches enveloppant au moins une étiquette radiofréquence électronique.

13. Plateau de service polyester **caractérisé en ce qu'**il est obtenu par le procédé de fabrication selon l'une quelconque des revendications 1 à 11, et qu'il comprend au moins deux couches superposées de résine thermodurcissable, lesdites couches enveloppant au moins une étiquette radiofréquence électronique.

## Claims

1. A method for producing a service tray consisting in a support including a substantially plane surface, and intended to transport products, comprising:
- a step of placing one or several electronic radio frequency label(s) (1, 10), on at least a first sheet of a heat-activated material (2, 14), with the material of the first sheet being thermosetting,
- a step of coating said electronic radio frequency label(s) (1, 10) with at least a second sheet of heat-activated material (4, 24) with the material of the second sheet being thermosetting,
- a step of hot die-casting of the first and second heat-activated sheets (2, 4, 14, 24) until the complete polymerization of the thermosetting materials of the first and second sheets.

2. A production method according to claim 1, **characterized in that** the step of coating is preceded by the positioning of said sheet(s) (2, 14) bearing said electronic radio frequency label(s) (1, 10) in the mould (3).

3. A production method according to claim 1 or claim 2, **characterized in that** it comprises a previous step of embedding one or several electronic radio frequency label(s) (1, 10) with a thermosetting material.

4. A production method according to any one of claims 1 to 3, **characterized in that** the first or the second sheet consists of a film for protecting said electronic radio frequency label(s).

5. A production method according to any one of claims 1 to 4, **characterized in that** the mould (3) is manually filled.

6. A production method according to any one of claims 1 to 4, **characterized in that** the mould (3) is mechanically filled.

7. A production method according to any one of the preceding claims, **characterized in that** the casting temperature is between 90°C and 200°C.

8. A production method according to any one of the preceding claims, **characterized in that** the casting operation is carried out under a pressure between 25kg/cm² and 100kg/cm².

9. A production method according to any one of the preceding claims, **characterized in that** the casting time amounts to between 30 seconds and 5 minutes.

10. A production method according to any one of the preceding claims, **characterized in that** the sheets (2, 4, 14, 24) are prepregs (SMC) or premixes (BMC).

11. A production method according to any one of claims 1 to 9, **characterized in that** the sheets (2, 4, 14, 24) are composed of paper films impregnated with phenolic resin and/or melamine resin.

12. A laminated melamine service tray, **characterized in that** it is obtained by the production method according to any one of claims 1 to 11, and **in that** it includes at least two superimposed layers of thermosetting resin, with said layers embedding at least one electronic radio frequency label.

13. A polyester service tray, **characterized in that** it is obtained by the production method according to any one of claims 1 to 11, and **in that** it comprises at least two superimposed layers of thermosetting resin, with said layers embedding at least one electronic radio frequency label.

## Patentansprüche

1. Verfahren für die Herstellung eines Tabletts, das aus einem Träger besteht, der eine deutlich ebene Oberfläche umfaßt, das für den Transport von Produkten bestimmt ist, und das folgende Schritte umfaßt:
- einen Schritt mit Aufbringen eines oder mehrerer elektronischer Funkfrequenzetiketten (1, 10) auf zumindest einem ersten Blatt aus thermoaktivierbarem Material (2, 14), wobei das Material des ersten Blatts wärmeaushärtend ist,
- einen Schritt mit Überziehen des/der besagten elektronischen Funkfrequenzetiketts/-etiketten (1, 10) mit zumindest einem zweiten Blatt aus thermoaktivierbarem Material (2, 24), wobei das Material des zweiten Blatts wärmeaushärtend ist,
- einen Schritt mit Heißpressen des ersten und zweiten thermoaktivierbaren Blatts (2, 4, 14, 24) bis zur vollständigen Polymerisierung des wärmeaushärtenden Materials des ersten und des zweiten Blatts.

2. Verfahren für die Herstellung nach Anspruch 1, **dadurch gekennzeichnet, daß** vor dem Schritt mit dem Überziehen das oder die besagte(n) Blatt / Blätter (2, 14) in die Gießform (3) eingelegt wird/werden, das / die das / die besagte(n) elektronische/n Funkfrequenzetikett(en) (1, 10) trägt / tragen.

3. Verfahren für die Herstellung nach Anspruch 1 oder Anspruch 2, **dadurch gekennzeichnet, daß** es einen vorherigen Schritt mit Umhüllung eines oder mehrerer elektronischen/er Funkfrequenzetiketts/en (1, 10) mit einem wärmeaushärtenden Material umfaßt.

4. Verfahren für die Herstellung nach einem beliebigen der vorstehenden Ansprüche 1 bis 3, **dadurch gekennzeichnet, daß** das erste oder das zweite Blatt aus einer Schutzfolie für das oder die besagte/n elektronische(n) Funkfrequenzetikett(en) besteht.

5. Verfahren für die Herstellung nach einem beliebigen der vorstehenden Ansprüche 1 bis 4, **dadurch gekennzeichnet, daß** die Gießform (3) von Hand geladen wird.

6. Verfahren für die Herstellung nach einem beliebigen der vorstehenden Ansprüche 1 bis 4, **dadurch gekennzeichnet, daß** die Gießform (3) mechanisch geladen wird.

7. Verfahren für die Herstellung nach einem beliebigen der vorstehenden Ansprüche, **dadurch gekennzeichnet, daß** die Gießtemperatur bei zwischen 90°C und 200°C liegt.

8. Verfahren für die Herstellung nach einem beliebigen der vorstehenden Ansprüche, **dadurch gekennzeichnet, daß** der Gießvorgang bei einem Druck von zwischen 25 kg/cm² und 100 kg/cm² abläuft.

9. Verfahren für die Herstellung nach einem beliebigen der vorstehenden Ansprüche, **dadurch gekennzeichnet, daß** die Gießzeit bei zwischen 30 Sekunden und 5 Minuten beträgt.

10. Verfahren für die Herstellung nach einem beliebigen der vorstehenden Ansprüche, **dadurch gekennzeichnet, daß** die Blätter (2, 4, 14, 24) Prepregs (SMC) oder Vormixe (BMC) sind.

11. Verfahren für die Herstellung nach einem beliebigen der vorstehenden Ansprüche 1 bis 9, **dadurch gekennzeichnet, daß** die Blätter (2, 4, 14, 24) aus Papierfolien bestehen, die mit Phenolharz beziehungsweise Melaminharz imprägniert sind.

12. Tablett aus melaminiertem Schichtstoff, **dadurch gekennzeichnet, daß** es mit dem Herstellungsprozeß nach einem beliebigen der vorstehenden Ansprüche 1 bis 11 erzielt wird, und **dadurch**, daß es mindestens zwei übereinanderliegende Schichten eines wärmeaushärtenden Harzes umfaßt, wobei die besagten Schichten zumindest ein elektronisches Funkfrequenzetikett umgeben.

13. Tablett aus Polyester, **dadurch gekennzeichnet, daß** es mit dem Herstellungsprozeß nach einem beliebigen der vorstehenden Ansprüche 1 bis 11 erzielt wird, und **dadurch**, daß es mindestens zwei übereinanderliegende Schichten eines wärmeaushärtenden Harzes umfaßt, wobei die besagten Schichten zumindest ein elektronisches Funkfrequenzetikett umgeben.
